# EUROPEAN PATENT SPECIFICATION

(11) **EP 1 985 903 B1**
(45) Date of publication and mention of the grant of the patent: **24.03.2010**
(21) Application number: 08154586.5
(22) Date of filing: 16.04.2008
(51) Int. Cl.: F16L 1/24

(54) **Device for submerging an elongated object**
Vorrichtung zum Eintauchen eines länglichen Objekts
Dispositif pour immerger un objet allongé

(30) Priority: 27.04.2007 SE 0701009
(43) Date of publication of application: 29.10.2008
(73) Proprietor: TTA-Consult AB, 724 60 Västerås (SE)
(72) Inventor: Melander, Gunnar, 724 60 Västerås (SE)
(74) Representative: Reyier, Ann-Mari

(56) References cited:
- DE-A1- 2 719 521

## Description

### TECHNICAL AREA AND PRIOR ART

The present invention relates to a device for submerging an elongated object, such as pipes, wires, cables and similar, which are to be anchored beneath water, wherein the device comprises a body with a groove shaped track to receive the elongated object, at least one strap shaped to in a mounted stage fixedly hold the body against the object, and a lining of an elastic material arranged between the device and the object, wherein the strap in each end is provided with a fastening element intended to be attached to the body, and the body is provided with fastening means arranged at each side of said track shaped to cooperate with said fastening element in order to attach the strap to the body.

The invention is mainly useful for laying pipes, wires, cables and similar in water, but it is understood that the invention also can be used for laying on the ground.

When laying pipes, wires, cables and similar it is known to use sinkers in order to keep the pipe in position, which are attached to the pipe. The size of the objects to be submerged may vary considerably. The largest pipes have a diameter which is larger than one and a half meter. When an object is to be laid down, for example, at the bottom of a sea, it happens that the object during the laying for a certain time has to be positioned in a vertical position with the sinkers mounted on the object. In this position the bonding, which keeps the sinker in position against the object, will be subject to very large forces which put high demand on the bonding.

To be able to anchor the object beneath water for a long time the installation has to be made in a material which can stand the corrosive environment.

From the Swedish patent number SE399956 a sinker for anchoring pipes, wires, cables and similar beneath the water is known. The sinker comprises a groove-shaped track to receive the elongated object, and slots and protruding holders for fixedly attaching the elongated object to the sinker. The fixed attachment of the elongated object to the sinker is achieved by an installation of straps made of an elastic rubber material, having ends provided with a thickening that is larger than the width of the slots for attachment. This sinker makes it possible to use a strap of a non-corrosive material. However, there are some problems with the strap and its mounting. One problem with the straps, which are made of an elastic material, is that they will be quickly weakened when they are in a mounted state, which means that their tensional force will be lost. Thereby the construction will loose its binding function. The tensional force can be lost within only a few weeks after the mounting. The reason why it is necessary to use a strap made of an elastic material has to do with the mounting method, in which the elongated object is fixedly mounted to the sinker. Since the ends of the strap are provided with thickenings that are larger than the width of the slots an significant stretching of the strap is needed when performing the mounting. Accordingly using a strap made of an elastic material is necessary for the mounting.

Another disadvantage with the described method for fixedly attaching the elongated object to the sinker is that a large stretching of the strap is needed in order to be able to move the thickening of the end of the strap, which is larger than the width of the slot, over the protruding shoulder before the strap can be moved into the slot and the thickening becomes is bearing on the shoulder. For anchoring of large pipes and wires it is necessary to have straps that cause large tensile forces. Since a large stretching of the strap is necessary during the mounting, according to the above, large forces are needed, which requires additional tools and involves risks for personal injury at an accident in a stretched state. This sinker is accordingly difficult to attach and requires strong tools for this purpose. Further, the disclosed sinker can not guarantee that function during many years on the sea bottom since the material in the strap will be exhausted after a short time.

The size of the objects to be submerged may vary considerably in size from some centimeters up to several meters in diameter. The largest pipes have a diameter which is larger than one and a half meter. When an object is to be laid down, for example, at a bottom of a sea, it happens that the object during the laying a certain time has to be positioned in a vertical position with the sinkers mounted on the object. In this position the bonding that keeps the sinker in position against the object will be subject to very large forces which put high demand on the bonding.

### OBJECTS AND SUMMARY OF THE INVENTION

The object of the present invention is to provide a device for submerging an elongated object, which overcomes said disadvantages with the prior art.

This object is achieved with a device according to claim 1.

The previously mentioned problems with the prior art are solved by the present invention by a strap which in one of its ends has been provided with a loop and an removable locking pin and by a lining of an elastic material which is compressed during the mounting and has been positioned between the device and the object. This mounting makes it possible to use a strap made of an inelastic, non-corrosive material, such as polyester, which is suitable for managing corrosive environments during a long time of mounting. The present invention solves the above problem partly by using a strap made of an essentially non-elastic material, and instead using the compression of the lining to achieve certain elasticity in the strap, and partly by using a removable locking pin which essentially reduces the necessary stretching of the strap during the mounting.

The device comprises an open slot for receiving the strap and a shoulder for attaching the strap by means of a removable locking pin. During the mounting, the locking pin is removed from the loop and the strap can be moved straight through the open slot, without, as in SE 399 956, being forced to be moved over the protruding shoulder due to the thickening of the end of the strap. The mounting is finished by pushing the removable locking pin into the loop and later bearing on the shoulder. The limited elasticity, which is necessary to be able to move the loop beneath the shoulder in order to make it possible to enter the locking pin, is obtained by compressing the lining that is positioned between the device and the object.

The use of an inelastic material, such as polyester, is made possible by a combination of the design of the installation and the compression of the lining, which allows a reduced stretching of the strap. Thereby the problem with exhaustion of the strap is solved, and an elastic attachment of the object and the body is maintained during a long time.

To be able to handle the forces imposed on the device when the object is in a vertical position during the mounting of the object, the elasticity of the lining is used by compressing it during the mounting, which causes a force opposite the compressing force. In such a way, the force that pushes the object against the body is increased. An elastic material which is in a compressed state is not exhausted in the same way as an elastic material which is in a stretched state, such as in the prior art. The elasticity in the lining is also used for obtaining the small prolongation of the strap which is needed during the mounting of the strap. The lining is suitably formed by any high quality rubber material, such as EPDM rubber. The body is preferably made of a concrete material.

At least one of the fastening means comprises an protruding holder provided with at least one open slot to receive the strap, wherein the holder on its underside forms a shoulder for attaching the strap, and at least one of the fastening elements comprises a removable locking pin, which has a length that is larger than the width of the slot, to bear on said shoulder. The slot has a width that is equal to, or a little bit larger than, the width of the strap, but is less than the width of the locking pin. This makes it possible to lock the strap in the slot by the locking pin, which is bearing on the underside of the shoulder. Thanks to the fact that the locking pin is removable, it is possible to first pass the strap without the locking pin through the slot, and later when the strap is in its position in the slot, put the locking pin in position, and thereby lock the strap in the slot. Accordingly it is not necessary to move the strap over the protruding holder during the mounting, which makes it possible to mount the inelastic strap without having to stretch the strap. This embodiment reduces the forces necessary to fixedly mount the strap in the holder.

According to an embodiment of the invention the protruding holder forms an angle to the body which is less than 90°. Thereby the locking pin is kept in place against the shoulder and thereby the safety of the locking is increased.

According to a further embodiment of the invention, the underside of the protruding holder is provided with a groove formed to receive the locking pin. Preferably, the groove has a length that essentially is the same as the length of the locking pin. Thereby the locking pin will be kept in place in the holder and thereby the safety of the locking is increased.

According to a further embodiment of the invention, at least one of the locking elements comprises a loop formed to receive the locking pin, wherein the loop is made of the strap itself. Thanks to the fact that the loop is made of the strap itself, no further parts have to be mounted on the strap, which simplifies the manufacturing of the strap and reduces production costs.

According to a further embodiment of the invention, the end that comprises the loop to receive the locking pin is provided with a handle to facilitate the mounting of the strap, wherein the handle comprises a bar and a second loop formed to receive the bar, wherein the loop is formed by the strap itself. During the mounting of the strap, it is advantageous to have a handle to hold when the strap is mounted in the slot and to facilitate the application of the force needed to compress the lining during the mounting. The fact that the loop is formed by the lining itself simplifies the manufacturing of the strap and reduces production costs.

According to a further embodiment of the invention, both fastening means comprise a protruding holder, each formed with at least one open slot to receive the straps, wherein the holders on their underside form a shoulder for attaching the straps, wherein the length of the straps between the fastening elements is somewhat longer than the distance between the shoulders. The length of the strap depends on the distance between the shoulders and the height of the lining when it is in a compressed state. The length of the strap shall be the same as the distance between the shoulders measured over the object plus the height of the compressed lining. In such a way a large tensile force is obtained between the pipe and the body even though the strap does not have any elasticity of its own.

Another object of the present invention is to achieve a method for mounting a device according to the invention. Such a method comprises the following steps: positioning said lining between the device and the object, positioning the object in the track of the body, attaching one of the fastening elements of the strap to the corresponding fastening means at one end of the object, moving the strap around the object and passing it through the slot of the fastening element on the other side of the object, applying a force on the strap in its longitudinal direction so that said lining is compressed and said loop is positioned on the underside of the holder, threading the loop with the locking pin, and ceasing to apply the force, wherein the locking pin is bearing on the shoulder so that the strap is fixed in relation to the body.

### SHORT DESCRIPTION OF THE DRAWINGS

The invention will now be explained closer by description of different of embodiments of the invention and with reference to the enclosed drawings.
Fig. 1 shows a side-view of a device according to an embodiment of the invention.
Fig. 2 shows a cross-section A-A through the device shown in figure 1.
Fig. 3 shows the strap and the lining in a cross-section B-B through the device shown in figure 2.
Fig. 4 shows the fastening mean and the fastening element in an enlarged view.

### DETAILED DESCRIPTION OF PREFERRED EMBODIMENTS OF THE INVENTION

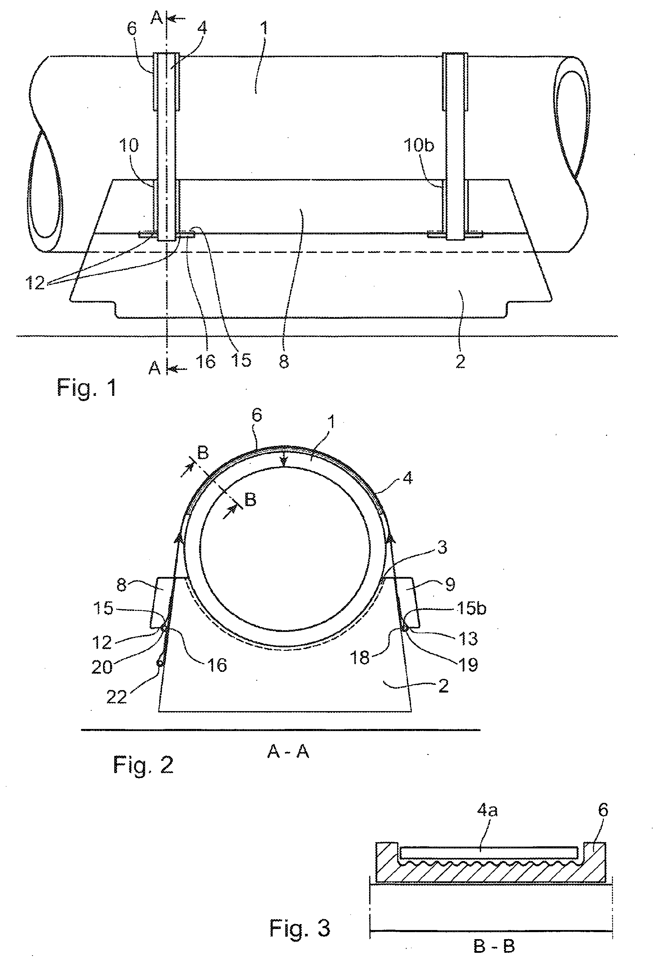

Figures 1-4 show an embodiment of a device according to the invention mounted on a pipe 1. The device comprises a body 2 with a groove-shaped track 3 to receive the pipe 1 and two straps 4. The body 2 forms a sinker. The body is shaped with a length that can be adapted according to the desired sinking force. The body is shaped in a concrete material. A lining 6 is mounted between the straps 4 and the pipe 1. The lining is made of an elastic material, for example some type of rubber material. The lining 6 can have any suitable shape and has to be compressible. The lining has several functions, one is to increase friction between the device and the object, and another function is to provide certain elasticity to the strap 4 during the mounting of the strap. Further, the lining has the function of providing the strap with a tensile force when the object is mounted on the body. The lining can also be mounted in the space between the groove shaped track 3 and the object 1. In another embodiment, a first lining can be mounted between the object and the strap, and a second lining can be mounted between the track 3 and the object 1.

The strap 4 is made of an inelastic material, such as a polyester ribbon. The straps can have any suitable shape. Protruding holders 8, 9 for the strap 4 are arranged on each side of the body 2. The holders 8, 9 are provided with slots 10 which run radially outward and have a width that is somewhat larger than the width of the strap 4, and the slots extend from the outer edges of the holder to the body 2. The holders thereby form protruding shoulders 12, 13 on each side of the slot 10. In the disclosed example, each of the holders is provided with two slots to receive two straps. The strap has a length that is equal to or a little bit larger than the distance between the shoulders 12, 13 on each side of the body and around the object without the lining 6, so that the strap can move around the pipe and the lining can be compressed. How much larger the length ought be depends on the height of the lining when it is in its compressed state. Accordingly, the strap must have a length that is equal to the distance between the shoulders 12, 13 over the piping plus the height of the compressed lining.

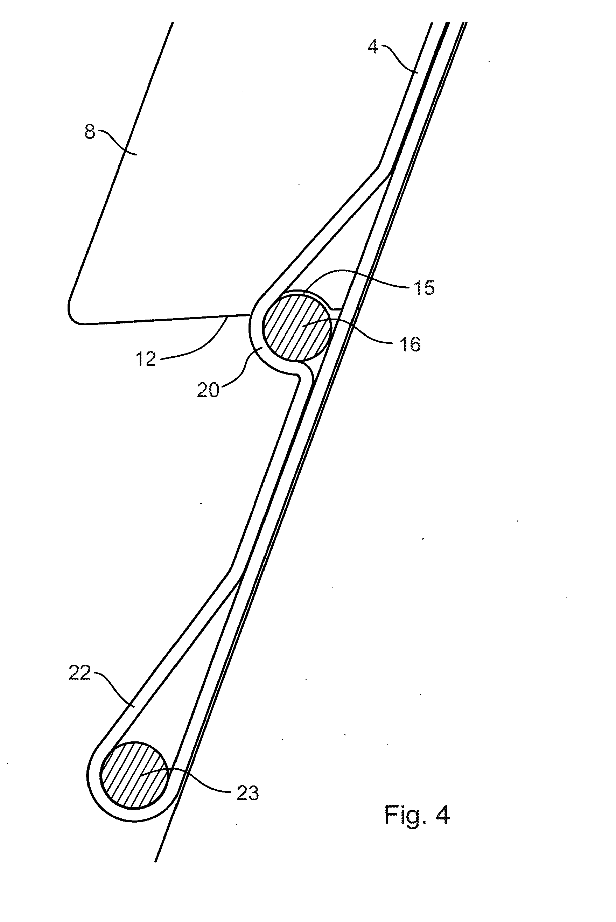

As is clear from figures 2 and 4, the undersides of the protruding holders 8, 9 form an angle to the body 2 which is less than 90°. The underside of the protruding holder 8 is provided with a groove 15 designed to receive a locking pin 16 for locking of the strap relative to the body. The groove 15 has a length that essentially correspond to the length of the locking pin 16 in order to keep the locking pin at its position and prevent it from moving lengthwise in the mounted state. The underside of the protruding holder 9 is also provided with a groove 15b designed to receive a pin 18 for locking of the strap relative to the body. The groove 15b has a length that essentially correspond to the length of the pin 18 in order to keep the locking pin at its position.

Fig. 3 shows an example of a possible design of the lining 6. The lining 6 is provided with a groove for housing the strap 4. In order to increase the elasticity of the lining the lining is provided with a plurality of radial ridges running parallel to each other along the longitudinal axis of the strap.

As shown in figure 2, the one end of the strap 4 is provided with a fastening element comprising a loop 19 formed by the strap itself, and the pin 18 which is made of non-corrosive material. Possibly the pin can be arranged removable relative the loop 19. The pin is arranged essentially perpendicular to the slot 10b in the holder 9. The strap 4 is attached to the body 2 by passing the strap through the slot 10b in the holder 9, and the pin 18, which runs through the loop 19 of the strap, is moved into the groove 15b of the holder 9 on its underside. The loop 19 and the pin 18 form one of the fastening elements of the strap. The holder 9 with the slot 10b and the groove 15b form one of the two fastening means of the body. This is only one embodiment of the fastening, in another embodiment it is possible to use different types of fastening elements and fastening means.

Figure 4 shows the other end of the strap in an enlarged view. The other end of the strap 4 is also provided with a loop 20 which is formed by the strap itself. As shown in the figure, the end of the strap is folded and attached to the strap so that two loops 20, 22 are formed by the strap. The first loop 20 is intended to house a removable locking pin 16, and the other loop 22 is intended to house a bar 23, which in this embodiment also is removable, but due to its function it does not have to be removable. The locking pin 16 has a shape that fits in the groove 15. Figure 4 shows the strap and the fastening in a locked position. The loop 20 and the locking pin 16 form the other one of the two fastening elements of the strap. The holder 8 with the slot 10 and the groove 15 constitutes the other of the two fastening means of the body. The loop 22 and the bar 23 form a handle to facilitate the mounting of the strap. After the strap has been mounted the bar is removed. Possibly, the whole handle can be removed from the strap, for example by cutting off this part of the strap after the mounting.

The locking pin 16, the pin 18, and the bar 23 are made of a non-corrosive material, for example CuZn35Ni3Mn2AIPb, and preferably all three have the same shape and size.

In the following a method is described for mounting a device according to the invention. The object 1 is positioned in the track 3 of the body 2. The pin 18 is positioned in the groove 13 of the holder 9 on one side of the body, and the strap 4 is passed into the slot 10b of the holder 9. Thereafter, the strap 4 is moved over the pipe 1 and over the lining 4 and is passed through the slot 10 of the holder 8 on the other side of the pipe. Note that the locking pin 16 has not yet been passed into the loop 20, which makes it possible to slip the strap through the slot even though the loop is positioned somewhat above the underside of the holder 8. If the bar 23 is also removable, it is also slipped into the loop 22. When the bar 23 is in position in the loop 22, the person carrying out the mounting applies a force on the strap in its longitudinal direction by pulling the handle 22, 23, wherein the lining 6 is compressed and the loop 20 is moved downward so that it is positioned on the underside of the holder 8. When the loop 20 is in a position which makes it possible to pass the locking pin into the loop, the locking pin is passed into the loop 20, and the mounting person releases the handle and the force will cease. The locking pin 16 will then come into its position in the groove 15 and the strap will be fixedly attached in relation to the body.

The present invention is not limited to the disclosed embodiments and can be varied and modified within the scope of the following claims. For example, the lining can be provided between the body and the object, between the strap and the object, between the body and the object as well as between the pipe and the strap.

## Claims

1. A device for submerging an elongated object (1), wherein the device comprises: a body (2) with a groove shaped track (3) to receive the elongated object, at least one strap (4) shaped to in a mounted stage fixedly hold the body against the object, and a lining (6) of an elastic material arranged between the device and the object, wherein the strap in each end is provided with a fastening element (18, 19, 16, 20) intended to be attached to the body, and the body is provided with fastening means (8, 9) arranged at each side of said track shaped to cooperate with said fastening element in order to attach the strap to the body, and at least one of the fastening means comprises a protruding holder (8, 9) provided with at least one open slot (10, 10b) to receive the strap, wherein the holder on its underside forms a shoulder (12, 13) for fastening the strap, **characterized in that** the strap is made of an essentially inelastic material, and the length of the strap between the fastening elements is adapted so that the strap in a mounted state at least partly compresses said lining, the lining is shaped so that it in a compressed state provides the strap with a tensional force that presses the object against the body, and at least one of the fastening elements comprises a removable locking pin (16, 18) having a length which is larger than the width of the slot to bear on said shoulder and a loop (20) shaped to receive said locking pin (16).

2. A device according to claim 1, **characterized in that** said protruding holder (8, 9) forms an angle with the body which is less than 90°.

3. A device according to any of the claims 1 or 2, **characterized in that** the underside of the protruding holder (8) is provided with a groove (15) formed to receive said locking pin (16).

4. A device according to claim 3, **characterized in that** said groove (15) has a length which essentially is the same as the length of the locking pin (16).

5. A device according to any of the claims 1-4, **characterized in that** said loop is formed by the strap itself.

6. A device according to claim 5, **characterized in that** the end of the strap having said loop (20) further is provided with a handle (22, 23) to facilitate the mounting of the strap, wherein the handle comprises a bar (23) and a second loop (22) formed to receive the bar, and the loop is formed by the strap itself.

7. A device according to claim 1, **characterized in that** both fastening means comprise protruding holders (8, 9) provided with at least one open slot (10, 10b) to receive the strap (4), wherein the holders on their undersides form a shoulder (12, 13) for fastening the strap, wherein the length of the strap between the fastening elements is somewhat longer than the distance between the shoulders.

8. A method for mounting a device according to claim 1,
wherein the method comprises the following steps:
positioning said lining (6) between the device and the object (1),
positioning the object in the track (3) of the body (2),
attaching one of the fastening elements (18,19,16,20) of the strap (4) to the corresponding fastening means at one end of the object,
moving the strap around the object and passing it through the slot of the fastening element on the other side of the object, **characterized in that**
applying a force on the strap in its longitudinal direction so that said lining is compressed and said loop (20) is positioned on the underside of the holder,
threading the loop with the locking pin (16,18), and
ceasing to apply the force, wherein the locking pin is bearing on the shoulder (12,13) so that the strap is fixed in relation to the body.

## Patentansprüche

1. Eine Vorrichtung zum Untertauchen eines gestreckten Objektes (1), wobei die Vorrichtung aufweist:
einen Körper (2) mit einem geriffelt gestalteten Auflager (3), um das gestreckte Objekt (1) aufzunehmen, mindestens ein Band (4), das derart gestaltet ist, dass dieses im montierten Zustand den Körper fest abstützt, und mit einer Auskleidung (6) aus einem elastischen Material, das zwischen der Vorrichtung und dem Objekt angeordnet ist, wobei das Band an beiden Enden mit einem Halteelement (18, 19, 16, 20) ausgestattet ist, das an dem Körper anbringbar ist, und wobei der Körper mit Haltemitteln (8, 9) ausgestaltet ist, die auf jeder Seite des genannten Auflagers angebracht sind und die derart ausgestaltet sind, dass diese mit dem genannten Halteelement zusammenwirken, um das Band an dem Körper zu befestigen, und mindestens einer der Haltemittel aufweisend einen vorstehenden Halter, der mit mindestens einer geöffneten Nut (10, 10b) ausgestattet ist, um das Band aufzunehmen, wobei der Halter an dessen Unterseite eine Schulter (12, 13) ausbildet, an dem das Band zu befestigen ist,
**dadurch gekennzeichnet,**
**dass** das Band aus einem im wesentlichen unelastischen Material hergestellt ist und die Länge des Bandes zwischen dem Halteelement derart angepasst ist, dass das Band im montierten Zustand mindestens teilweise die genannte Auskleidung zusammenpresst, die Auskleidung ist derart gestaltet, dass diese in einem zusammengepressten Zustand auf das Band eine Druckkraft ausübt, durch die das Objekt gegen den Körper gedrückt ist und dass mindestens eine der genannten Halteelemente einen entfernbaren Verschluss (16, 18) aufweist, der eine Länge hat, die größer ist als die Tiefe der Nut, die an der genannten Schulter angebracht ist und eine Schlinge (20), die derart ausgestaltet ist, dass der genannte Verschluss (16) aufgenommen ist.

2. Eine Vorrichtung nach Anspruch 1,
**dadurch gekennzeichnet,**
**dass** der genannte herausragende Halter (8, 9) mit dem Körper einen Winkel bildet, der kleiner als 90° ist.

3. Eine Vorrichtung nach Anspruch 1 oder 2,
**dadurch gekennzeichnet,**
**dass** die Unterseite des herausragenden Halters (8) mit einer Riffelung (15) ausgestattet ist, die derart ausgebildet ist, dass der genannte Verschluss (16) aufgenommen ist:

4. Eine Vorrichtung nach Anspruch 3,
**dadurch gekennzeichnet,**
**dass** die genannte Riffelung (15) eine Länge aufweist, die im Wesentlichen die gleiche Länge als der Verschluss (16) besitzt.

5. Eine Vorrichtung nach einem der Ansprüche 1 bis 4,
**dadurch gekennzeichnet,**
**dass** die genannte Schlinge durch das Band selbst geformt ist.

6. Eine Vorrichtung nach Anspruch 5,
**dadurch gekennzeichnet,**
**dass** das Ende des Bandes die genannte Schlinge (20) ist und dass diese ausgestattet ist mit einem Bügel (22, 23), um die Befestigung des Bandes zu vereinfachen, wobei der Bügel eine Stange (23) aufweiset und eine zweite Schwinge (22) derart gestaltet ist, um die Stange aufzunehmen, wobei die Schlinge durch das Band selbst geformt ist.

7. Eine Vorrichtung nach Anspruch 1,
**dadurch gekennzeichnet,**
**dass** beide Haltemittel die übertragenden Halter (8, 9) aufweise, die mit mindestens einer offenen Nut (10, 10b) ausgestattet sind, um das Band (4) aufzunehmen, wobei die Halter auf Ihrer Unterseite eine Schulter (12, 13) ausbilden, um das Band zu befestigen, wobei die Länge des Bandes zwischen dem Halteelement etwas länger ist als der Abstand zwischen den Schultern,

8. Eine Methode, um eine Vorrichtung gemäß Anspruch 1 zu befestigen, wobei die Methode die folgenden Schritte umfasst:
Positionierung der genannten Auskleidung (6) zwischen der Vorrichtung und dem Objekt (1).
Positionierung des Objektes in dem Auflager (3) des Körpers (2).
Anbringen eines der beiden Befestigungselemente (18, 10, 16, 20) des Bandes (4) zu den korrespondierenden Befestigungsmitteln auf einer Seite des Objekts,
Bewegen des Bandes um das Objekt und Hindurchschieben des Bandes durch die Nut des Befestigungselementes auf der anderen Seite des Objekttes,
**gekennzeichnet durch,**
Aufbringen einer Kraft auf das Band in dessen Längsrichtung, so dass die genannte Auskleidung zusammengepresst ist und die genannte Schlinge (20) auf der Unterseite des Halters positioniert ist,
Einfädeln der Schlinge in den Verschlussstift (16, 18) und
Beenden der Kraftaufbringung, wobei der Verschlussstift auf der Schulter (12, 13) derart aufgenommen ist, dass das Band mit dem Körper fixiert ist.

## Revendications

1. Dispositif d'immersion d'un objet (1) oblong, dans lequel le dispositif comprend : un corps (2) ayant une piste (3) en forme de rainure pour recevoir l'objet oblong, au moins une courroie (4) formée pour maintenir de manière fixe à l'état monté le corps contre l'objet, et un revêtement (6) en une matière élastique disposé entre le dispositif et l'objet, dans lequel la courroie est munie à chaque extrémité d'un élément (18, 19 16, 20) de fixation destiné à être fixé au corps et le corps est muni de moyens (8, 9) de fixation disposés de chaque côté de la piste et conformés pour coopérer avec l'élément de fixation afin d'attacher la courroie au corps, et au moins l'un des moyens de fixation comprend une poignée (8, 9) en saillie munie d'au moins une fente (10, 10b) ouverte pour recevoir la courroie, la poignée ou son côté inférieur formant un épaulement (12, 13) pour fixer la courroie, **caractérisé en ce que** la courroie est en une matière essentiellement inélastique et la longueur de la courroie entre les éléments de fixation est telle que la courroie à l'état monté comprime au moins en partie le revêtement, le revêtement est conformé de manière à donner à l'état comprimé à la courroie une force de traction qui presse l'objet sur le corps et au moins l'un des éléments de fixation comprend une broche (16, 18) amovible de verrouillage, ayant une longueur qui est plus grande que la largeur de la fente, pour porter sur l'épaulement et une boucle (20) conformée pour recevoir la broche (16) de verrouillage.

2. Dispositif suivant la revendication 1, **caractérisé en ce que** la poignée (8, 9) en saillie fait un angle avec le corps qui est de moins de 90°.

3. Dispositif suivant l'une quelconque des revendications 1 ou 2, **caractérisé en ce que** le côté inférieur de la poignée (8) en saillie est munie d'une rainure (15) formée pour recevoir la broche (16) de verrouillage.

4. Dispositif suivant la revendication 3, **caractérisé en ce que** la rainure (15) a une langueur qui est sensiblement la même que la langueur de la broche (16) de verrouillage.

5. Dispositif suivant l'une quelconque des revendications 1 ou 4, **caractérisé en ce que** la boucle est formée par la courroie soi-même.

6. Dispositif suivant la revendication 5, **caractérisé en ce que** l'extrémité de la courroie ayant la boucle (20) est munie en outre d'une poignée (22, 23) pour faciliter le montage de la courroie, la poignée comprenant une barre (23) et une deuxième boucle (22) formée pour recevoir la barre et la boucle est formée par la courroie soi-même.

7. Dispositif suivant la revendication 1, **caractérisé en ce que** les deux moyens de fixation comprennent des poignées (8, 9) en saillies munies d'au moins une fente (10, 10b) ouverte pour recevoir la courroie, les poignées formant sur leurs côtés inférieurs des épaulements (12, 13) pour fixer la courroie, la langueur de la courroie entre les éléments de fixation étant quelque peu palus grande que la distance entre les épaulements.

8. Procédé pour monter un dispositif suivant la revendication 1,
dans lequel le procédé comprend les stades suivants :
on met le revêtement (6) en position entre le dispositif et l'objet (1),
on met l'objet en position dans la piste (3) du corps (2),
on fixe l'un des éléments (18, 19, 16, 20) de fixation de la courroie (4) aux moyens de fixation correspondants à une extrémité de l'objet,
on fait passer la courroie autour de l'objet et on la fait passer dans la fente de l'élément de fixation de l'autre côté de l'objet,
**caractérisé en ce que**
on applique une force sur la courroie dans une direction longitudinale de manière à comprimer le revêtement et à mettre la boucle (20) en position sur le côté inférieur de la poignée,
on enfile la broche (16, 18) de verrouillage dans la boucle, et
on cesse d'appliquer la force, la broche de verrouillage portant sur l'épaulement (12, 13) de sorte que la courroie est fixée par rapport au corps.
